(19) Europäisches Patentamt
European Patent Office
Office européen des brevets

(11) **EP 3 361 033 B1**

(12) **EUROPÄISCHE PATENTSCHRIFT**

(45) Veröffentlichungstag und Bekanntmachung des Hinweises auf die Patenterteilung:
**13.09.2023   Patentblatt 2023/37**

(21) Anmeldenummer: **17207500.4**

(22) Anmeldetag: **14.12.2017**

(51) Internationale Patentklassifikation (IPC):
***E05F 15/63*** *(2015.01)*

(52) Gemeinsame Patentklassifikation (CPC):
**E05F 15/63;** E05F 2015/631; E05Y 2201/408;
E05Y 2400/302; E05Y 2400/31; E05Y 2400/315;
E05Y 2400/80

(54) **VERFAHREN ZUR INBETRIEBNAHME EINES TÜR- ODER FENSTERSCHLIESSERS**
METHOD FOR STARTING UP A DOOR OR WINDOW CLOSER
PROCÉDÉ DE MISE EN SERVICE D'UN DISPOSITIF DE FERMETURE DE PORTE OU DE FENÊTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2017   DE 102017201951**

(43) Veröffentlichungstag der Anmeldung:
**15.08.2018   Patentblatt 2018/33**

(73) Patentinhaber: **GEZE GmbH**
**71229 Leonberg (DE)**

(72) Erfinder: **Hucker, Dr., Matthias**
**76359 Marxzell (DE)**

(56) Entgegenhaltungen:
**EP-A1- 0 548 505        EP-A1- 2 290 808
EP-A2- 1 437 476        EP-A2- 1 870 552
DE-A1-102005 001 328   DE-A1-102011 055 491
DE-A1-102014 201 399   DE-B3-102015 200 284
US-A- 5 687 507         US-A1- 2010 115 853**

**Beschreibung**

Die vorliegende Erfindung betrifft ein Verfahren zur Inbetriebnahme eines Tür- oder Fensterschließers, der einen Energiespeicher zum Bereitstellen einer Schließkraft zum Schließen eines drehbaren Flügels der Tür oder des Fensters und eine der Schließkraft entgegenwirkende Dämpfungseinrichtung mit einem als Generator betreibbaren Elektromotor umfasst, wobei eine Motorwelle des Elektromotors über wenigstens ein Übertragungselement mit dem Flügel gekoppelt und deshalb durch eine Bewegung des Flügels drehbar ist.

Tür- und Fensterschließer dienen dazu, einen manuell geöffneten Flügel nach dessen Loslassen kraftbetätigt wieder zu schließen. Die Schließkraft kann beispielsweise durch eine Schließerfeder aufgebracht werden, die beim manuellen Öffnen des Flügels gespannt wird. Die Dämpfungseinrichtung dient dazu, einen übermäßig schnellen Schließvorgang zu verhindern. Die Motorklemmen des Elektromotors können zum Zweck der Dämpfung mittels eines oder mehrerer Schaltelemente kurzgeschlossen werden. Zum Steuern oder Regeln der Dämpfung kann eine elektronische Steuereinrichtung die Motorklemmen abwechselnd kurzschließen und trennen und so eine Pulsweitenmodulation des Motorstroms durchführen. Eine solche Dämpfungssteuerung ist in der DE 10 2015 200 284 B3 beschrieben.

Tür- und Fensterschließer gibt es in unterschiedlichen Bauformen. Zudem kann ein Türschließer in unterschiedlicher Art und Weise montiert werden. Beispielsweise kann je nach Anwendungsvorgabe eine Kopfmontage oder eine Türblattmontage erfolgen. Weiterhin kann ein Türschließer wahlweise an der Bandseite oder an der Bandgegenseite angebracht werden. Ferner kann die Kraftübertragung zwischen Flügel und Blendrahmen mittels eines Gleitarms oder mittels eines Scherengestänges erfolgen. Zudem ist zwischen der Montageart für einen linksdrehenden Flügel und der Montageart für einen rechtsdrehenden Flügel zu unterscheiden.

Die Abhängigkeit der Flügelstellung von der Motorwellenstellung oder der Stellung einer Schließerwelle, auch als Übersetzung bezeichnet, ist für die einzelnen Bauformen und Montagearten im Allgemeinen unterschiedlich. Für eine exakte und zuverlässige Steuerung der Dämpfungseinrichtung muss aber die tatsächliche Abhängigkeit bekannt sein, damit sie berücksichtigt werden kann. Um die korrekten Montageparameter und somit die Übersetzung festzulegen, kann ein Monteur sie beim Einbau des Schließers über eine Schnittstelle eingeben. Dies ist jedoch zeitaufwändig und lästig. Zudem kann es leicht zu Fehleingaben kommen.

Die D1 EP 1 437 476 A2 beschreibt einen Antrieb für einen Flügel mit einem elektrischen Antriebsmotor und einer Schließfeder zum jeweiligen Öffnen und Schließen des Türflügels. Bei der Inbetriebnahme wird der Flügel durch den elektronischen Antriebsmotor im Rahmen einer sogenannten "Lernfahrt" mit einer vorbestimmten Leistung in Öffnungs- und Schließrichtung betrieben. Die dadurch ermittelten Parameter wie Öffnungsweite und Gewicht des Flügels werden als Sollwertprofil in der Steuerungseinrichtung gespeichert. Das flügelstellungsabhängige Sollwertprofil regelt anschließend die Öffnungs- und Schließgeschwindigkeit des an den Antrieb angeschlossenen Flügels. Das Schließen des Flügels erfolgt unter Wirkung der Schließfeder, wobei der Antriebsmotor generatorisch betrieben wird und den Schließvorgang bremst.

Die D2 EP 1 870 552 A2 beschreibt eine Vorrichtung zur Schließfolgeregelung für zweiflügelige Drehtüren mit einem Türantrieb zum motorischen Öffnen und einer Schließfeder zum Schließen der Türflügel. Bei der Inbetriebnahme der Vorrichtung wird eine Lernfahrt durchgeführt um die Geschlossen- und Offenstellung der Türflügel zu erfassen. Beim Schließvorgang kann der Antriebsmotor von einer Steuerung generatorisch betrieben werden um diesen abzubremsen.

Die DE 10 2005 001 328 A1 offenbart ein Verfahren zum Betreiben eines Drehtürantriebs, bei dem der Türflügel nach einer einprogrammierten Bremsrampe verzögert wird und in die Offen-Position fährt.

In der US 2010/0115853 A1 ist eine Steuerung für einen elektrischen Türantrieb offenbart, welche auf dem Schalten von Stromquellen-Anschlüssen beruht.

Die US 5,687,507 offenbart einen Türschließer, der mit einer Schließgeschwindigkeitsregelung versehen ist.

Es ist eine Aufgabe der Erfindung, die Inbetriebnahme von Tür- oder Fensterschließern der genannten Art zu vereinfachen.

Die Lösung der Aufgabe erfolgt durch ein Verfahren mit den Merkmalen des Anspruchs 1.

Erfindungsgemäß ist vorgesehen, dass der Flügel in einem Einlernprozess wenigstens einmal manuell geöffnet wird, während des manuellen Öffnens die Winkelstellung der Motorwelle erfasst wird, anhand der erfassten Winkelstellung der Motorwelle ein Funktionszusammenhang zwischen der Winkelstellung der Motorwelle und einer Winkelstellung des drehbaren Flügels zumindest über einen Bereich der Öffnungsweite des Flügels bestimmt wird und der Funktionszusammenhang automatisch einer nachfolgenden Ansteuerung des Elektromotors zur Dämpfung der Schließbewegung des Flügels zugrunde gelegt wird. Es wird also nicht eine theoretische Abhängigkeit der Flügelstellung von der Motorwellenstellung vorgegeben, sondern es wird die tatsächliche Abhängigkeit der Flügelstellung von der Motorwellenstellung eingelernt. Dies ist nicht nur einfacher und schneller als eine Eingabe über eine Schnittstelle, sondern es werden auch unerwünschte Fehleingaben vermieden. Dadurch dass der Funktionszusammenhang zwischen der Motorwellenstellung und der Flügelstellung automatisch ermittelt und für den nachfolgenden Betrieb des Türschließers festgelegt wird, entfallen die umständlichen und fehlerträchtigen manuellen Eingaben bei der Montage. Der Monteur muss vielmehr lediglich eine einmalige Flügelöffnung oder Flügelschließung vornehmen und gegebenenfalls den Einlernvorgang bestätigen.

Die Erfindung beruht insbesondere auf der Erkenntnis, dass alle wesentlichen Montageparameter aus der Drehstellung der Motorwelle in Abhängigkeit von der Flügelposition abzuleiten sind und dass die genannte Abhängigkeit auf relativ einfache Weise durch Überwachen der Motorwellenstellung während eines einmaligen Öffnungs- oder Schließvorgangs ermittelbar ist. Die Winkelstellung der Motorwelle kann kontinuierlich oder intermittierend über den gesamten Öffnungswinkelbereich des Flügels hinweg erfasst werden, wobei dies jedoch nicht zwingend ist. Eine erfindungsgemäße Inbetriebnahme ermöglicht eine besonders exakte und zuverlässige Steuerung der Dämpfungseinrichtung eines Tür- oder Fensterschließers unabhängig von der Montageart, der Übersetzung und/oder des Spiels im Übertragungspfad.

Die Erfindung sieht vor, dass der Flügel in dem Einlernprozess bis zu einer Referenz-Öffnungsstellung geöffnet wird, die Winkelstellung der Motorwelle an der Referenz-Öffnungsstellung des Flügels erfasst wird und der Funktionszusammenhang in Abhängigkeit von der an der Referenz-Öffnungsstellung erfassten Winkelstellung der Motorwelle aus einem Satz vorbestimmter Referenz-Funktionen ausgewählt wird. Die vorbestimmten Referenz-Funktionen können in einer Speichereinrichtung der elektronischen Steuereinheit des Tür- oder Fensterschließers abgelegt sein. Durch das Auswählen einer Funktion aus einem Satz vordefinierter Funktionen kann der Berechnungsaufwand minimiert werden. In vielen Fällen kann die Montageart unmittelbar aus der Stellung der Motorwelle an einer einzelnen Referenz-Öffnungsstellung des Flügels abgeleitet werden.

Die Referenzfunktionen entsprechen unterschiedlichen Bauarten und/oder unterschiedlichen Montagearten des Tür- oder Fensterschließers. Für eine vorgegebene Bauart und/oder Montageart ist der Funktionszusammenhang zwischen der Motorwellenstellung und der Flügelstellung nämlich im Allgemeinen bekannt, so dass er vordefiniert werden kann.

Weiterbildungen der Erfindung sind in den abhängigen Ansprüchen, der Beschreibung sowie der beigefügten Zeichnung angegeben.

Vorzugsweise wird anhand der erfassten Winkelstellung der Motorwelle auch das Massenträgheitsmoment des Flügels bestimmt und automatisch einer nachfolgenden Ansteuerung des Elektromotors zur Dämpfung der Schließbewegung des Flügels zugrunde gelegt. Für eine exakte Steuerung der Dämpfungseinrichtung anhand eines Bewegungsmodells ist die Kenntnis des tatsächlichen Massenträgheitsmoments des Flügels notwendig. Für einen Monteur auf einer Baustelle ist es jedoch schwierig oder sogar unmöglich, das Massenträgheitsmoment des Flügels mit hinreichender Genauigkeit zu bestimmen. Es ist daher von großem Vorteil, wenn das tatsächliche Massenträgheitsmoment des Flügels im Rahmen der Inbetriebnahme automatisch bestimmt und festgelegt wird.

Eine Ausführungsform der Erfindung sieht vor, dass der Energiespeicher eine Schließerfeder umfasst, wobei anhand der erfassten Winkelstellung der Motorwelle auch eine Federvorspannung der Schließerfeder bestimmt und automatisch einer nachfolgenden Ansteuerung des Elektromotors zur Dämpfung der Schließbewegung des Flügels zugrunde gelegt wird. Die Federvorspannung hat Einfluss auf das Schließverhalten des Flügels und sollte daher bei der Steuerung der Dämpfungseinrichtung berücksichtigt werden. Häufig ist sie jedoch manuell einstellbar und daher variabel. Der Monteur könnte in solchen Fällen den eingestellten Wert über eine Schnittstelle eingeben, was jedoch aufwändig und lästig ist. Zudem ist der eingestellte Wert häufig nicht genau genug ablesbar. Bei einer automatischen Bestimmung der Federvorspannung anhand der erfassten Winkelstellung der Motorwelle entfällt die lästige und ungenaue manuelle Eingabe.

Vorzugsweise ist vorgesehen, dass jeder Referenz-Funktion eine der Referenz-Öffnungsstellung entsprechende Vorgabe-Winkelstellung der Motorwelle zugeordnet ist und diejenige Referenz-Funktion als Funktionszusammenhang ausgewählt wird, deren Vorgabewinkelstellung am wenigsten von der an der Referenz-Öffnungsstellung erfassten Winkelstellung der Motorwelle abweicht. Dies trägt dem Umstand Rechnung, dass es stets unvermeidliche geringfügige Abweichungen des tatsächlichen Schließverhaltens vom idealisierten Schließverhalten gibt.

Um die Genauigkeit und die Robustheit des Verfahrens zu verbessern, kann der Flügel in dem Einlernprozess mehrmals bis zu unterschiedlichen Referenz-Öffnungsstellungen geöffnet werden, wobei der Funktionszusammenhang in Abhängigkeit von mehreren an Referenz-Öffnungsstellungen erfassten Winkelstellungen der Motorwelle ausgewählt wird. Die Auswahl kann derart erfolgen, dass die Gesamtabweichung minimiert wird.

Bevorzugt umfasst die Referenz-Öffnungsstellung einen auf eine Schließstellung bezogenen Öffnungswinkel des Flügels von 90° und/oder von 45°. Für einen Monteur ist es relativ leicht, den Flügel in derartige Winkelstellungen zu bewegen.

Eine nicht zur Erfindung gehörende Alternative sieht vor, dass der Flügel in dem Einlernprozess wenigstens einmal ausgehend von einer Referenz-Öffnungsstellung durch den Energiespeicher geschlossen wird, wobei während des Schließens zumindest abschnittsweise die Winkelstellung der Motorwelle in Abhängigkeit von der Zeit erfasst wird und der Funktionszusammenhang in Abhängigkeit von dem zeitlichen Verlauf der Winkelstellung bestimmt wird. Aus dem zeitlichen Verlauf der Winkelstellung kann nämlich in relativ einfacher Weise der Funktionszusammenhang zwischen der Motorwellenstellung und der Flügelstellung abgeleitet werden.

Insbesondere kann der Funktionszusammenhang in Abhängigkeit von dem zeitlichen Verlauf der Winkelstellung der Motorwelle aus einem Satz vorbestimmter Referenz-Funktionen ausgewählt werden. Der tatsächliche Zeitverlauf kann also mit vorgegebenen idealisierten Zeitverläufen verglichen werden, um so den am besten passenden Verlauf auszuwählen.

Es kann vorgesehen sein, dass jeder Referenz-Funktion ein vorgegebener zeitlicher Verlauf der Winkelstellung der Motorwelle zugeordnet ist und diejenige Referenz-Funktion als Funktionszusammenhang ausgewählt wird, deren vorgegebener zeitlicher Verlauf am wenigsten von dem erfassten zeitlichen Verlauf abweicht. Im Allgemeinen wird der erfasste zeitliche Verlauf nicht exakt mit einem vorgegebenen theoretischen Verlauf übereinstimmen. Durch Auswahl der am wenigsten vom erfassten zeitlichen Verlauf abweichenden Referenz-Funktion können die tatsächlichen Gegebenheiten jedoch hinreichend genau modelliert werden.

Der Funktionszusammenhang kann aus dem zeitlichen Verlauf der Winkelstellung des Flügels und dem zeitlichen Verlauf der Winkelstellung der Motorwelle durch Eliminieren der Zeitvariable berechnet werden. Dies ermöglicht auf relativ einfache Weise die Berechnung des tatsächlichen Schließverhaltens, wobei eine Verwendung vordefinierter Referenz-Funktionen nicht notwendig ist.

Gemäß einer weiteren nicht zur Erfindung gehörenden Alternative wird während des Schließens die Winkelstellung des Flügels mittels eines am Flügel angeordneten Positionssensors, insbesondere mittels eines Beschleunigungssensors und/oder eines Gyroskops, erfasst. Dies ermöglicht auf relativ einfache Weise die Ermittlung des zeitlichen Verlaufs der Flügelstellung während des zum Einlernen vorgenommenen Öffnungs- oder Schließvorgangs.

Zur Erfassung der Winkelstellung des Flügels kann ein Mobiltelefon mit einem Positionssensor lösbar am Flügel angebracht werden, wobei von dem Positionssensor erfasste Daten nach dem Schließen des Flügels an eine Steuereinrichtung des Tür- oder Fensterschließers übertragen werden. Es ist dann nicht notwendig, den Flügel mit einem Positionssensor auszustatten oder einen speziellen Positionssensor zur Mitführung durch den Monteur bereitzustellen. Zum lösbaren Anbringen des Mobiltelefons am Flügel kann beispielsweise eine Tasche oder Klammer an einer Flachseite des Flügels angeordnet sein. Grundsätzlich ist es auch möglich, einen fest montierten Positionssensor am Flügel vorzusehen.

Eine weitere nicht zur Erfindung gehörende Alternative sieht vor, dass die Schließgeschwindigkeit des Flügels durch Steuern des Elektromotors anhand des bestimmten Funktionszusammenhangs zumindest zeitweilig konstant gehalten wird, wobei während der Schließbewegung mit konstanter Schließgeschwindigkeit an wenigstens zwei Punkten die Winkelstellung der Motorwelle erfasst wird und die erfassten Winkelstellungen der Motorwelle in eine Modellgleichung eingesetzt werden, welche eine unbeschleunigte Bewegung des Flügels beschreibt, und wobei durch Lösen der Modellgleichung die Federvorspannung einer Schließerfeder der Dämpfungseinrichtung bestimmt wird. Der erfindungsgemäß bestimmte Funktionszusammenhang zwischen der Winkelstellung der Motorwelle und der Winkelstellung des drehbaren Flügels kann also in vorteilhafter Weise zum Berechnen der Federvorspannung verwendet werden.

Die Modellgleichung kann eine Energiebilanz darstellen, welche die elektrische Verlustenergie des Elektromotors und die Differenz der Spannenergie der Schlie-ßerfeder zwischen den beiden Punkten gleichsetzt. Eine derartige Modellgleichung ist relativ einfach zu lösen.

Alternativ kann die Modellgleichung eine Momentenbilanz der an der Motorwelle wirkenden Drehmomente darstellen. Bei dieser Variante kann bei Bedarf anhand mehrerer verschiedener Gleichungen ein Mittelwert gebildet werden.

Es kann auch vorgesehen sein, dass der bestimmte Funktionszusammenhang in eine die Bewegung des Flügels beschreibende Modellgleichung eingesetzt wird und durch Lösen der Modellgleichung das Massenträgheitsmoment des Flügels bestimmt wird. Vorzugsweise wird hierfür die Bewegung des Flügels in einem ungedämpften Anfangsbereich betrachtet. Das ermittelte Massenträgheitsmoment kann für verschiedene weitere Steuerungs- und Überwachungsaufgaben verwendet werden.

Die Winkelstellung der Motorwelle kann in einfacher Weise mittels eines Inkrementalgebers erfasst werden.

Die Erfindung betrifft auch einen Tür- oder Fensterschließer, der einen Energiespeicher zum Bereitstellen einer Schließkraft zum Schließen eines drehbaren Flügels der Tür oder des Fensters, eine der Schließkraft entgegenwirkende Dämpfungseinrichtung mit einem als Generator betreibbaren Elektromotor und eine elektronische Steuereinrichtung zum Ansteuern des Elektromotors umfasst.

Erfindungsgemäß ist die elektronische Steuereinrichtung für ein wie vorstehend beschriebenes Inbetriebnahmeverfahren ausgelegt.

Die Erfindung wird nachfolgend beispielhaft anhand der beigefügten Zeichnungen beschrieben.

Fig. 1    ist eine schematische Darstellung eines erfindungsgemäßen Türschließers.

Fig. 2    ist ein Diagramm, das die Abhängigkeit der Winkelstellung einer Abtriebswelle des in Fig. 1 gezeigten Türschließers von der Winkelstellung des zugehörigen Türflügels für zwei verschiedene Montagearten darstellt.

Fig. 3    ist ein Diagramm, das die Abhängigkeit der Winkelstellung einer Motorwelle des in Fig. 1 gezeigten Türschließers von der Zeit für zwei verschiedene Montagearten darstellt.

Fig. 4    zeigt eine Tür mit einem Türschließer und einer Tasche zur lösbaren Anbringung eines Mobiltelefons am Flügel der Tür.

Fig. 5    ist eine Draufsicht auf den in Fig. 4 gezeigten Flügel.

Fig. 6    ist ein Diagramm, das die Abhängigkeit der Federauslenkung einer Schließerfeder eines erfindungsgemäßen Türschließers von der Winkelstellung einer Abtriebswelle des Türschließers für zwei verschiedene Federvorspannungen darstellt.

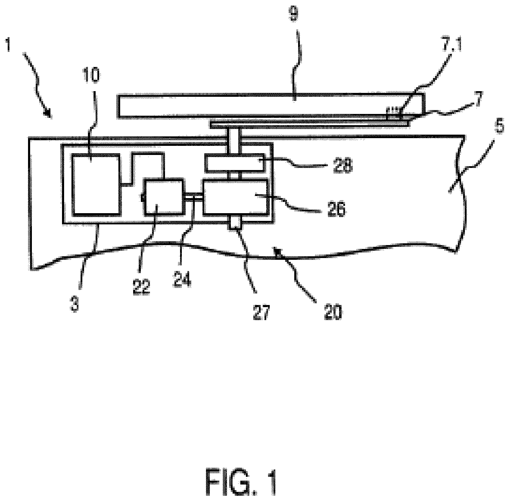

Der in Fig. 1 gezeigte Türschließer 1 weist ein Gehäuse 3 auf, in welchem ein mechanischer Energiespeicher in Form einer Schließerfeder 28 und eine Bremsvorrichtung 20 angeordnet sind. Die Schließerfeder 28 wird durch manuelles Öffnen des drehbaren Türflügels 5 mit potentieller Energie aufgeladen, welche den losgelassenen Türflügel 5 wieder schließt. Die Bremsvorrichtung 20 dämpft die Bewegung des Türflügels 5 und umfasst einen als Generator betriebenen Elektromotor 22, dessen Motorwelle 24 durch eine Bewegung des Türflügels 5 drehbar ist und an dessen nicht dargestellten Motorklemmen eine bewegungsabhängige Motorspannung entsteht, welche an einen Bremsstromkreis angelegt ist. Der Bremsstromkreis weist ein oder mehrere Schaltelemente auf, über welche die Motorklemmen kurzgeschlossen werden können. Eine zum Ansteuern des Elektromotors 22 vorgesehene elektronische Steuereinrichtung 10 führt eine Pulsweitenmodulation des Motorstroms durch und stellt eine wirksame Bremskraft zur Dämpfung der Bewegung des Türflügels 5 ein. Vorzugsweise umfasst die Steuereinrichtung 10 einen Mikrocontroller. Der Elektromotor 22 ist vorzugsweise als permanentmagnetisch erregter Gleichstrommotor ausgeführt. Die Pulsweitenmodulation kann insbesondere so durchgeführt werden, wie dies in der DE 10 2015 200 284 B3 angegeben ist.

Bei dem in Fig. 1 dargestellten Ausführungsbeispiel ist das Gehäuse 3 flügelfest am oberen linken Randbereich des Türflügels 5 montiert. Die Motorwelle 24 des Elektromotors 22 ist über ein Getriebe 26 mit einer Abtriebswelle 27 gekoppelt, welche mit einem Gleitarm 7 gekoppelt ist. Der Gleitarm 7 weist an seinem freien Ende einen Gleitstein 7.1 auf, welcher in einer blendenfest montierten Gleitschiene 9 geführt ist. Beim Öffnen und Schließen des Türflügels 5 wird über das Getriebe 26 die Motorwelle 24 des Elektromotors 22 gedreht. Anstelle der Anordnung aus Gleitarm 7 und Gleitschiene 9 könnte auch eine Scherenhebel-Anordnung vorgesehen sein, deren eines Ende in einem blendenfesten Schwenklager sitzt. Am Elektromotor 22 ist ein nicht gezeigter Inkrementalgeber zum sensorischen Erfassen der Winkelstellung der Motorwelle 24 vorgesehen.

Nachfolgend wird die Inbetriebnahme des in Fig. 1 gezeigten Türschließers 1 beschrieben. Das Inbetriebnahmeverfahren dient insbesondere dazu, bestimmte Montageparameter und Kenngrößen automatisch zu ermitteln. Damit die Bremsvorrichtung 20 die gedämpfte Schließbewegung des Türflügels 5 in einer gewünschten Weise steuern oder regeln kann, muss nämlich zum Beispiel die Montageart bekannt sein. Da die Bewegung des Türflügels 5 gesteuert oder geregelt werden soll, im Allgemeinen aber lediglich die Winkelstellung der Motorwelle 24 bekannt ist, durch sensorische Erfassung mittels des Inkrementalgebers, wird außerdem die Abhängigkeit der Winkelstellung des Türflügels 5 von der Winkelstellung der Motorwelle 24 benötigt. Für bestimmte Steuerungs- und Überwachungsaufgaben, beispielsweise eine Begrenzung der Schließgeschwindigkeit des Türflügels 5 auf einen ungefährlichen Grenzwert, wird weiterhin das Massenträgheitsmoment des Türflügels 5 sowie die eingestellte Federvorspannung der Schließerfeder 28 benötigt.

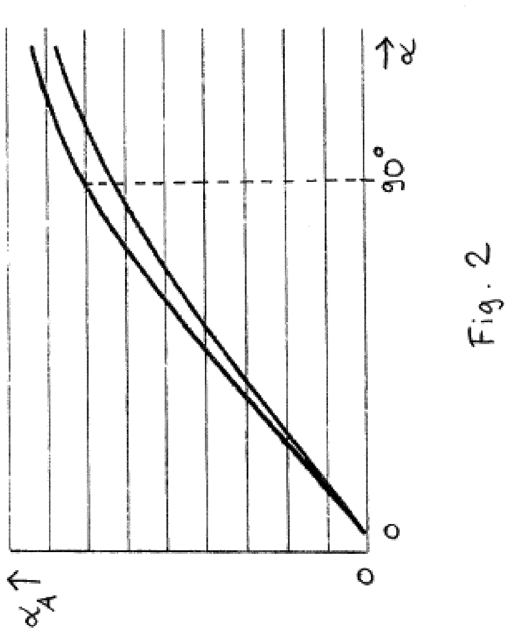

In Fig. 2 sind zwei beispielhafte Verläufe der Winkelstellung $\alpha_A$ der Abtriebswelle 27 in Abhängigkeit von der Winkelstellung $\alpha$ des Türflügels 5 dargestellt, die unterschiedlichen Montageparametern in Form verschiedener Abstände der Abtriebswelle 27 vom Türband entsprechen. Wie zu erkennen ist, ist die Winkelstellung $\alpha_A$ der Abtriebswelle 27 bei einem vorgegebenen Referenz-Öffnungswinkel des Türflügels 5, beispielsweise bei einem Öffnungswinkel von 90°, für die beiden Achsabstände unterschiedlich. Weiterhin steht die Winkelstellung $\alpha_A$ der Abtriebswelle 27 über die Übersetzung des Getriebes 26 mit der Winkelstellung $\alpha_M$ der Motorwelle 24 in Zusammenhang. Das bedeutet, dass bei einem Öffnen des Türflügels 5 bis zu dem Referenz-Öffnungswinkel und einem nachfolgenden Erfassen und Auslesen der Winkelstellung der Motorwelle 24 mittels des Inkrementalgebers zwischen den beiden Montageparametern unterschieden werden kann.

Um den tatsächlichen Montageparameter einzulernen, öffnet der Monteur bei der Inbetriebnahme des Türschließers 1 den Türflügel 5 bis zu einem Öffnungswinkel von 90°. Nach Erreichen des Öffnungswinkels wird die Winkelstellung $\alpha_M$ der Motorwelle 24 mittels des Inkrementalgebers erfasst. Die erfasste Winkelstellung $\alpha_M$ der Motorwelle 24 wird dann mit verschiedenen Referenzfunktionen verglichen, die in einem Speicher der Steuereinrichtung 10 (Fig. 1) hinterlegt sind. Diejenige Referenzfunktion, deren Funktionswert für die Winkelstellung $\alpha_M(90°)$ der Motorwelle 24 an der Stelle 90° am wenigsten von der erfassten Winkelstellung der Motorwelle 24 abweicht, wird automatisch einer nachfolgenden Ansteuerung des Elektromotors 22 zur Dämpfung der Schließbewegung des Türflügels 5 zugrunde gelegt.

Der Monteur kann bei der Inbetriebnahme den Türflügel 5 auch einmal bis zu einem Öffnungswinkel von 90° und einmal bis zu einem Öffnungswinkel von 45° öffnen, wobei jeweils die Winkelstellungen $\alpha_M$ der Motorwelle 24 erfasst werden. Es stehen dann zwei Werte für einen Vergleich mit den Referenzfunktionen zur Verfügung, wodurch das Auswahlverfahren robuster gegenüber einer unvermeidlichen Variation der Montageparameter wird. Bei Bedarf können weitere Öffnungsvorgänge mit anderen Öffnungswinkeln durchgeführt werden.

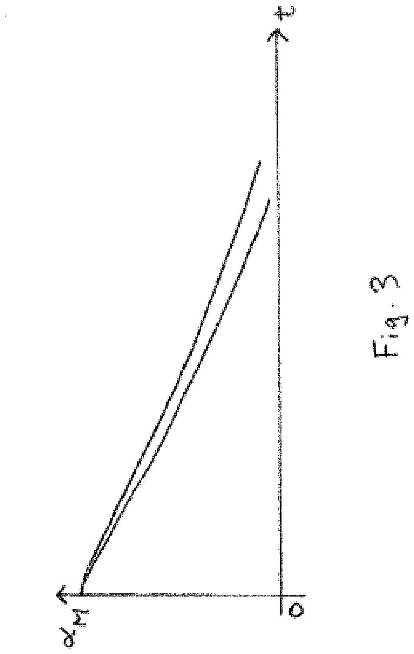

Bei einem alternativen, nicht erfindungsgemäßen Inbetriebnahmeverfahren öffnet der Monteur den Türflügel 5 bis zu einem Öffnungswinkel von 90° und lässt ihn dann los. Die Schließerfeder 28 schließt den Türflügel 5, wobei der Schließvorgang zunächst ungedämpft oder mit konstanter Dämpfung erfolgt. Der Inkrementalgeber erfasst die Winkelstellung $\alpha_M$ der Motorwelle 24 in Abhängigkeit von der Zeit t. Je nach Montageart, Massenträgheit des Türflügels 5 und Vorspannung der Schließerfeder 28 gibt es verschiedene Zeitverläufe $\alpha_M(t)$ für die Winkelstellung der Motorwelle 24. Zwei beispielhafte Verläufe sind in Fig. 3 dargestellt. Die Steuereinrichtung 10 sucht den am besten passenden Zeitverlauf in einer Datenbank aus abgespeicherten Verläufen und leitet daraus die Montageart und gegebenenfalls weitere Parameter wie die Schließrichtung ab.

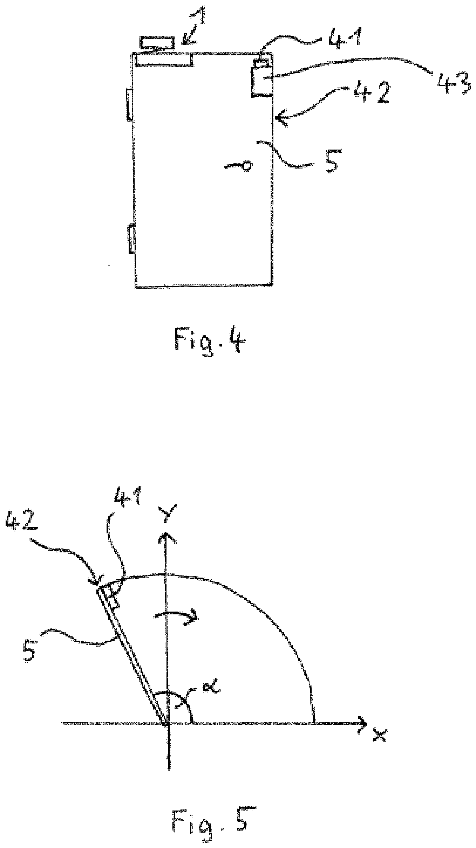

Unter Bezugnahme auf Fig. 4 und 5 wird eine weitere Möglichkeit zum Bestimmen des Funktionszusammenhangs zwischen der Winkelstellung $\alpha_M$ der Motorwelle 24 und der Winkelstellung $\alpha$ des Türflügels 5 beschrieben. Der Monteur nimmt bei der Inbetriebnahme des Türschließers 1 ein Mobiltelefon 41 mit Gyroskop und platziert es in einer an der Hauptschließkante 42 des Türflügels 5 vorgesehenen Tasche 43. Anschließend wird der Türflügel 5 bis zum maximalen Öffnungswinkel geöffnet und losgelassen. Die Schließerfeder 28 schließt den Türflügel 5, wobei das Gyroskop des Mobiltelefons 41 den zeitlichen Verlauf der Ortskoordinaten x und y der Hauptschließkante 42 erfasst (Fig. 5). Während des Schließvorgangs erfasst der Inkrementalgeber fortlaufend die Winkelstellung $\alpha_M$ der Motorwelle 24. Nach dem Schließvorgang verbindet der Monteur das Mobiltelefon 41 mit der Steuereinrichtung 10, beispielsweise mittels eines Kabels oder mittels einer Funkverbindung. Die Steuereinrichtung 10 empfängt die zeitabhängigen Koordinaten x und y von dem Mobiltelefon 41 und berechnet durch Eliminieren der Zeit den Funktionszusammenhang zwischen der Winkelstellung $\alpha_M$ der Motorwelle 24 und der Winkelstellung $\alpha$ des Türflügels 5. Dies kann insbesondere unter Verwendung der folgenden Formeln erfolgen:

$$x(t) = b \cdot \cos(\alpha(t))$$

$$y(t) = b \cdot \sin(\alpha(t)) \, ,$$

wobei b die Breite des Türflügels 5 ist. Zusätzlich kann die Steuereinrichtung 10 aus den zeitabhängigen Koordinaten x und y die maximale Öffnungsweite, die Breite b des Türflügels 5 und/oder die Schließrichtung ermitteln. Im Prinzip könnte das Gyroskop auch in den Türschließer 1 integriert sein, so dass kein Mobiltelefon erforderlich ist. Die Steuereinrichtung 10 kann dann beim Schließen des Türflügels 5 gleichzeitig die Winkelstellung $\alpha_M$ der Motorwelle 24 und die Winkelstellung $\alpha$ des Türflügels 5 ermitteln und daraus unmittelbar den Funktionszusammenhang $\alpha_M(\alpha)$ bestimmen. Anstelle eines Gyroskops können auch andere Arten von Positionssensoren, wie zum Beispiel Beschleunigungssensoren, Magnetfeldsensoren oder dergleichen verwendet werden.

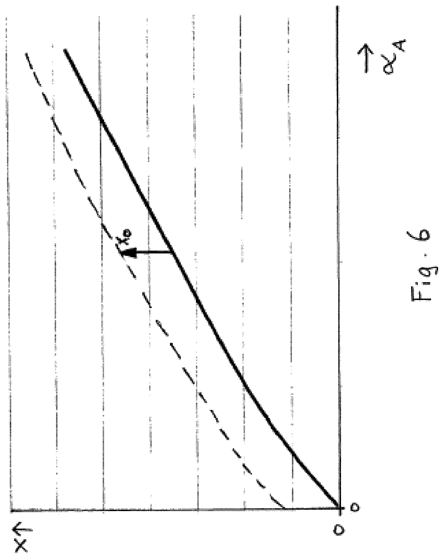

Bei einem erfindungsgemäßen Inbetriebnahmeverfahren kann auch die Federvorspannung der Schließerfeder 28 eingelernt werden. Die Abhängigkeit des Achsmoments $m_A$ der Abtriebswelle 27 von der Auslenkung x der Schließerfeder 28 ist durch die Konstruktion des Türschließers 1 bestimmt und der Steuereinrichtung 10 bekannt. Das durch die Federvorspannung erzeugte Zusatzmoment $m_{FD}$ der Schließerfeder 28 ist hingegen zunächst unbekannt. Die Verschiebung der Federkennlinie in Abhängigkeit von der Federvorspannung ist in Fig. 6 angegeben, welche die Federauslenkung x in Abhängigkeit von der Winkelstellung $\alpha_A$ der Abtriebswelle 27 einmal durchgezogen ohne Vorauslenkung $x_0$ und einmal gestrichelt mit Vorauslenkung $x_0$ zeigt.

Bei konstanter Schließgeschwindigkeit des Türflügels 5 entspricht die Bremsleistung der Bremsvorrichtung 20 bis auf vernachlässigbare Verluste der Abnahme der potentiellen Energie in der Schließerfeder 28. Der Monteur öffnet bei der Inbetriebnahme den Türflügel 5 und lässt ihn wieder los. Die Schließerfeder 28 schließt den Türflügel 5. Nach einer kurzen Beschleunigungsphase regelt die Bremsvorrichtung 20 die Schließbewegung des Türflügels 5 auf konstante Geschwindigkeit. Dies ist insbesondere unter Verwendung des zuvor wie vorstehend beschrieben eingelernten Funktionszusammenhangs zwischen der Winkelstellung $\alpha_M$ der Motorwelle 24 und der Winkelstellung $\alpha$ des Türflügels 5 möglich. Wenn sich der Türflügel 5 zwischen den beiden Öffnungswinkeln $\alpha_2$ und $\alpha_1$ mit konstanter Geschwindigkeit bewegt, so ist für die Beschleunigung des Türflügels 5 keine Energie erforderlich und es gilt folgende Gleichung:

$$\int_{\alpha_2}^{\alpha_1} u(t)i(t)\,dt = \frac{1}{2}c(x^2(\alpha_2) - x^2(\alpha_1))$$

Hierbei bezeichnet c die Federrate. Die Steuereinrichtung 10 sorgt dafür, dass der Strom $i(t)$ und die Spannung $u(t)$ in Abhängigkeit von der Zeit t zwischen den Türwinkeln $\alpha_2$ und $\alpha_1$ erfasst werden. Für die Verlustenergie ergibt sich unter Verwendung der Auslenkung $x_{ohne}$ ohne Vorspannung:

$$\frac{1}{2}c[(x_{ohne}(\alpha_2) + x_0)^2 - (x_{ohne}(\alpha_1) + x_0)^2]$$

$$= \frac{1}{2}c[(x_{ohne}(\alpha_2))^2 - (x_{ohne}(\alpha_1))^2 + 2(x_{ohne}(\alpha_2) - x_{ohne}(\alpha_1))x_0]$$

Hieraus kann die Federvorspannung $x_0$ berechnet werden.

In einem alternativen Verfahren zum Einlernen der Federvorspannung der Schlie-ßerfeder 28 öffnet der Monteur den Türflügel 5 und lässt ihn wieder los, wobei die Bremsvorrichtung 20 die Schließbewegung des Türflügels 5 wiederum nach einer kurzen Beschleunigungsphase auf konstante Geschwindigkeit regelt. Im Bereich konstanter Geschwindigkeit wirkt kein äußeres Moment auf den Türflügel 5, so dass folgende Gleichung gilt:

$$K \cdot i(t) = \frac{\eta_G}{\ddot{u}_G}(m_F(t) + m_{F0})$$

Hierbei bezeichnet $K$ die Drehmomentkonstante des Elektromotors 22, $i(t)$ den Motorstrom, $\eta_G$ den Wirkungsgrad des Getriebes 26, $\ddot{u}_G$ die Übersetzung des Getriebes, $m_F$ das Federmoment und $m_{F0}$ die Federvorspannung. Aus der angegebenen Gleichung kann leicht die Federvorspannung $m_{F0}$ abgeleitet werden.

Für die Berechnung der Federvorspannung steht im Prinzip eine Vielzahl von Gleichungen zur Verfügung, da für jede Änderung des Achswinkels eine neue Gleichung zur Berechnung der Federvorspannung aufgestellt werden kann. Aufgrund von Störungen und Ungenauigkeiten des Modells wird die Steuereinrichtung 10 im Allgemeinen für jede Gleichung einen anderen Wert für die Federvorspannung $m_{F0}$ berechnen. Ein zuverlässiger Schätzwert für die Federvorspannung $m_{F0}$ kann insbesondere der arithmetische Mittelwert aller erhaltenen Ergebnisse sein.

Vor dem Erreichen der Schließlage dämpft die Bremsvorrichtung 20 den Türflügel 5 auf die gewünschte Endgeschwindigkeit.

Bei einem erfindungsgemäßen Verfahren zur Inbetriebnahme des Türschließers 1 kann auch das Massenträgheitsmoment $J$ des Türflügels 5 eingelernt werden. Hierfür öffnet der Monteur den Türflügel 5 und lässt diesen wieder los. Die Schließbewegung erfolgt zunächst während einer kurzen anfänglichen Beschleunigungsphase ungedämpft. Es wirkt auch kein äußeres Moment. Daher kann unter Verwendung folgender Gleichung das Massenträgheitsmoment $J$ errechnet werden:

$$J\frac{1}{\ddot{u}_G\ddot{u}_B(\alpha)}\frac{d\omega(t)}{dt} + \frac{\eta_G}{\ddot{u}_G}(m_F(\alpha_A) + m_{F0}) = 0$$

Hierbei bezeichnet $\ddot{u}_B$ die Übersetzung $\alpha_A(\alpha)/\alpha$ und $\omega(t)$ die Winkelgeschwindigkeit des Türflügels 5.

Nach der Inbetriebnahme des Türschließers 1 kann die Steuereinrichtung 10 den eingelernten Funktionszusammenhang $\alpha_M(\alpha)$ zwischen der Winkelstellung der Motorwelle 24 und der Winkelstellung des Türflügels 5, das eingelernte Massenträgheitsmoment $J$ sowie die eingelernte Federvorspannung $m_{F0}$ der Schließerfeder 28 zur Steuerung der Schließbewegung des Türflügels 5 gemäß einer vorgegeben Bahnkurve verwenden.

Speziell kann die Steuereinrichtung 10 dazu ausgebildet sein, eine Soll-Bahnkurve festzulegen, welche den Öffnungswinkel $\alpha$ des Türflügels 5 in Abhängigkeit von der Zeit $t$ angibt, und die über den Elektromotor 22 ausgeübte Dämpfung der Schließbewegung des Türflügels 5 anhand der festgelegten Soll-Bahnkurve durchzuführen. Die Regelung selbst kann hierbei nach grundsätzlich bekannten Prinzipien erfolgen, beispielsweise mittels eines Positionsreglers oder mittels eines Geschwindigkeitsreglers. Hierdurch wird ein situationsangepasstes Schließverhalten des Türschließers 1 und somit ein besonders hoher Begehkomfort der zugehörigen Tür ermöglicht.

Bezugszeichenliste

1    Türschließer
3    Gehäuse
5    Türflügel

| | |
|---|---|
| 7 | Gleitarm |
| 7.1 | Gleitstein |
| 9 | Gleitschiene |
| 10 | Steuereinrichtung |
| 20 | Bremsvorrichtung |
| 22 | Elektromotor |
| 24 | Motorwelle |
| 26 | Getriebe |
| 27 | Abtriebswelle |
| 28 | Schließerfeder |
| 41 | Mobiltelefon |
| 42 | Hauptschließkante |
| 43 | Tasche |

**Patentansprüche**

1. Verfahren zur Inbetriebnahme eines Tür- oder Fensterschließers (1), der einen Energiespeicher (28) zum Bereitstellen einer Schließkraft zum Schließen eines drehbaren oder verschiebbaren Flügels (5) der Tür oder des Fensters, eine der Schließkraft entgegenwirkende Dämpfungseinrichtung (20) mit einem als Generator betreibbaren Elektromotor (22) und eine elektronische Steuereinrichtung (10) zum Ansteuern des Elektromotors (22) umfasst, wobei eine Motorwelle (24) des Elektromotors (22) über wenigstens ein Übertragungselement (7, 26, 27) mit dem Flügel (5) gekoppelt und deshalb durch eine Bewegung des Flügels (5) drehbar ist,
**dadurch gekennzeichnet, dass**

der Flügel (5) in einem Einlernprozess wenigstens einmal manuell geöffnet wird,
während des manuellen Öffnens die Winkelstellung der Motorwelle (24) erfasst wird,
anhand der erfassten Winkelstellung der Motorwelle (24) ein Funktionszusammenhang zwischen der Winkelstellung der Motorwelle (24) und einer Winkelstellung des drehbaren Flügels (5) zumindest über einen Bereich der Öffnungsweite des Flügels (5) bestimmt wird und
der Funktionszusammenhang automatisch einer nachfolgenden Ansteuerung des Elektromotors (22) zur Dämpfung der Schließbewegung des Flügels (5) zugrundegelegt wird,
wobei der Flügel (5) in dem Einlernprozess bis zu einer Referenz-Öffnungsstellung manuell geöffnet wird, die Winkelstellung der Motorwelle (24) an der Referenz-Öffnungsstellung des Flügels (5) erfasst wird und der Funktionszusammenhang in Abhängigkeit von der an der Referenz-Öffnungsstellung erfassten Winkelstellung der Motorwelle (24) aus einem Satz vorbestimmter Referenz-Funktionen ausgewählt wird, die unterschiedlichen Bauarten und/oder unterschiedlichen Montagearten des Tür- oder Fensterschließers (1) entsprechen.

2. Verfahren nach Anspruch 1,
**dadurch gekennzeichnet, dass**
anhand der erfassten Winkelstellung der Motorwelle (24) auch das Massenträgheitsmoment des Flügels (5) bestimmt und automatisch einer nachfolgenden Ansteuerung des Elektromotors (22) zur Dämpfung der Schließbewegung des Flügels (5) zugrundegelegt wird.

3. Verfahren nach Anspruch 1 oder 2,
**dadurch gekennzeichnet, dass**
der Energiespeicher (28) eine Schließerfeder umfasst, wobei anhand der erfassten Winkelstellung der Motorwelle (24) auch eine Federvorspannung der Schließerfeder bestimmt und automatisch einer nachfolgenden Ansteuerung des Elektromotors (22) zur Dämpfung der Schließbewegung des Flügels (5) zugrundegelegt wird.

4. Verfahren nach Anspruch 1,
**dadurch gekennzeichnet, dass**
jeder Referenz-Funktion eine der Referenz-Öffnungsstellung entsprechende Vorgabe-Winkelstellung der Motorwelle (24) zugeordnet ist und diejenige Referenz-Funktion als Funktionszusammenhang ausgewählt wird, deren Vorgabe-Winkelstellung am wenigsten von der an der Referenz-Öffnungsstellung erfassten Winkelstellung der Motorwelle (24) abweicht.

5. Verfahren nach Anspruch 1 oder 4,

**dadurch gekennzeichnet, dass**
der Flügel (5) in dem Einlernprozess mehrmals bis zu unterschiedlichen Referenz-Öffnungsstellungen geöffnet wird und der Funktionszusammenhang in Abhängigkeit von mehreren an Referenz-Öffnungsstellungen erfassten Winkelstellungen der Motorwelle (24) ausgewählt wird.

6. Verfahren nach einem der Ansprüche 1, 4 bis 5,
   **dadurch gekennzeichnet, dass**
   die Referenz-Öffnungsstellung einen auf eine Schließstellung bezogenen Öffnungswinkel des Flügels (5) von 90° und/oder von 45° umfasst.

7. Verfahren nach zumindest einem der vorstehenden Ansprüche,
   **dadurch gekennzeichnet, dass**
   der bestimmte Funktionszusammenhang in eine die Bewegung des Flügels (5) beschreibende Modellgleichung eingesetzt wird und durch Lösen der Modellgleichung das Massenträgheitsmoment des Flügels (5) bestimmt wird.

8. Verfahren nach zumindest einem der vorstehenden Ansprüche,
   **dadurch gekennzeichnet, dass**
   die Winkelstellung der Motorwelle (24) mittels eines Inkrementalgebers erfasst wird.

9. Tür- oder Fensterschließer (1), der einen Energiespeicher (28) zum Bereitstellen einer Schließkraft zum Schließen eines drehbaren Flügels (5) der Tür oder des Fensters, eine der Schließkraft entgegenwirkende Dämpfungseinrichtung (20) mit einem als Generator betreibbaren Elektromotor (22) und eine elektronische Steuereinrichtung (10) zum t Ansteuern des Elektromotors (22) umfasst, wobei eine Motorwelle (24) des Elektromotors (22) über wenigstens ein Übertragungselement (7, 26, 27) mit dem Flügel (5) gekoppelt und deshalb durch eine Bewegung des Flügels (5) drehbar ist und wobei der Tür- oder Fensterschließer (1) einen Inkrementalgeber zum Erfassen der Winkelstellung der Motorwelle (24) umfasst,
   **dadurch gekennzeichnet, dass**
   die elektronische Steuereinrichtung (10) für ein Inbetriebnahmeverfahren nach einem der vorstehenden Ansprüche ausgelegt ist.

**Claims**

1. Method for activating a door or window closer (1) which comprises an energy store (28) for providing a closing force for closing a rotatable and/or displaceable door leaf or window casement (5), a damping device (20) which counteracts the closing force and has an electric motor (22) which can be operated as a generator, and an electronic control device (10) for driving the electric motor (22), wherein a motor shaft (24) of the electric motor (22) is coupled to the leaf or casement (5) by means of at least one transmission element (7, 26, 27) and therefore can be rotated by moving the leaf or casement (5),
   **characterized in that**

   the leaf or casement (5) is manually opened at least once in a learning process,
   the angular position of the motor shaft (24) is detected during the manual opening,
   a functional relationship between the angular position of the motor shaft (24) and an angular position of the rotatable leaf or casement (5) is determined at least over a region of the opening width of the leaf or casement (5) on the basis of the detected angular position of the motor shaft (24), and the functional relationship is automatically used as a basis for subsequently driving the electric motor (22) for damping the closing movement of the leaf or casement (5),
   wherein the leaf or casement (5) is manually opened up to a reference opening position in the learning process, the angular position of the motor shaft (24) is detected at the reference opening position of the leaf or casement (5) and the functional relationship is selected from a set of predetermined reference functions, which correspond to different designs and/or different installation types of the door or window closer (1), depending on the angular position of the motor shaft (24) detected at the reference opening position.

2. Method according to Claim 1,
   **characterized in that**
   the mass moment of inertia of the leaf or casement (5) is also determined on the basis of the detected angular position of the motor shaft (24) and automatically used as a basis for subsequent driving of the electric motor (22) for damping the closing movement of the leaf or casement (5).

3. Method according to Claim 1 or 2,
   **characterized in that**
   the energy store (28) comprises a closer spring, wherein a spring prestress of the closer spring is also determined on the basis of the detected angular position of the motor shaft (24) and is automatically used as a basis for subsequent driving of the electric motor (22) for damping the closing movement of the leaf or casement (5) .

4. Method according to Claim 1,
   **characterized in that**
   a preset angular position of the motor shaft (24) which corresponds to the reference opening position is associated with each reference function, and that reference function of which the preset angular position differs least from the angular position of the motor shaft (24) detected at the reference opening position is selected as the functional relationship.

5. Method according to Claim 1 or 4,
   **characterized in that**
   the leaf or casement (5) is opened several times up to different reference opening positions in the learning process and the functional relationship is selected depending on a plurality of angular positions of the motor shaft (24) detected at reference opening positions.

6. Method according to one of Claims 1, 4 and 5,
   **characterized in that**
   the reference opening position comprises an opening angle, with respect to a closed position, of the leaf or casement (5) of 90° and/or of 45°.

7. Method according to at least one of the preceding claims,
   **characterized in that**
   the determined functional relationship is inserted into a model equation describing the movement of the leaf or casement (5) and the mass moment of inertia of the leaf or casement (5) is determined by solving the model equation.

8. Method according to at least one of the preceding claims,
   **characterized in that**
   the angular position of the motor shaft (24) is detected by means of an incremental encoder.

9. Door or window closer (1) which comprises an energy store (28) for providing a closing force for closing a rotatable door leaf or window casement (5), a damping device (20) which counteracts the closing force and has an electric motor (22) which can be operated as a generator, and an electronic control device (10) for driving the electric motor (22), wherein a motor shaft (24) of the electric motor (22) is coupled to the leaf or casement (5) by means of at least one transmission element (7, 26, 27) and therefore can be rotated by moving the leaf or casement (5), and wherein the door or window closer (1) comprises an incremental encoder for detecting the angular position of the motor shaft (24),
   **characterized in that**
   the electronic control device (10) is designed for a activation method according to one of the preceding claims.

**Revendications**

1. Procédé de mise en service d'un dispositif de fermeture de porte ou de fenêtre (1) qui comprend un accumulateur d'énergie (28) destiné à fournir une force de fermeture destinée à fermer un vantail rotatif ou coulissant (5) de la porte ou de la fenêtre, un dispositif d'amortissement (20) qui s'oppose à la force de fermeture et qui comprend un moteur électrique (22) utilisable comme générateur et un dispositif de commande électronique (10) destiné à commander le moteur électrique (22), un arbre de moteur (24) du moteur électrique (22) étant accouplé au vantail (5) par le biais d'au moins un élément de transmission (7, 26, 27) et pouvant donc être entraîné en rotation par un mouvement du vantail (5),
   **caractérisé en ce que**

   le vantail (5) est ouvert manuellement au moins une fois dans un processus d'apprentissage,

la position angulaire de l'arbre de moteur (24) étant détectée lors de l'ouverture manuelle,

sur la base de la position angulaire détectée de l'arbre de moteur (24), une relation fonctionnelle entre la position angulaire de l'arbre de moteur (24) et une position angulaire du vantail rotatif (5) étant déterminée au moins sur une plage de largeur d'ouverture du vantail (5) et

la relation fonctionnelle étant utilisée automatiquement pour effectuer une commande ultérieure du moteur électrique (22) afin d'amortir le mouvement de fermeture du vantail (5),

le vantail (5) étant ouvert manuellement dans le processus d'apprentissage jusqu'à une position d'ouverture de référence, la position angulaire de l'arbre de moteur (24) étant détectée à la position d'ouverture de référence du vantail (5) et la relation fonctionnelle étant choisie en fonction de la position angulaire détectée de l'arbre de moteur à la position d'ouverture de référence (24) parmi un ensemble de fonctions de référence prédéterminées qui correspondent à différentes conceptions et/ou différents types de montage du dispositif de fermeture de porte ou de fenêtre (1).

2. Procédé selon la revendication 1,
   **caractérisé en ce que**
   le moment d'inertie du vantail (5) est également déterminé sur la base de la position angulaire détectée de l'arbre de moteur (24) et est automatiquement utilisé comme base pour effectuer une commande ultérieure du moteur électrique (22) afin d'amortir le mouvement de fermeture du vantail (5).

3. Procédé selon la revendication 1 ou 2,
   **caractérisé en ce que**
   l'accumulateur d'énergie (28) comprend un ressort de fermeture, une précontrainte du ressort de fermeture étant déterminée sur la base de la position angulaire détectée de l'arbre de moteur (24) et utilisée automatiquement comme base pour effectuer une commande ultérieure du moteur électrique (22) afin d'amortir le mouvement de fermeture du vantail (5).

4. Procédé selon la revendication 1,
   **caractérisé en ce que**
   chaque fonction de référence est associée à une position angulaire par défaut de l'arbre de moteur (24) qui correspond à la position d'ouverture de référence, et la fonction de référence qui est sélectionnée comme relation fonctionnelle est celle dont la position angulaire par défaut s'écarte le moins de la position angulaire de l'arbre de moteur (24) qui est détectée à la position d'ouverture de référence.

5. Procédé selon la revendication 1 ou 4,
   **caractérisé en ce que**
   le vantail (5) est ouvert plusieurs fois dans le processus d'apprentissage à différentes positions d'ouverture de référence et la relation fonctionnelle est choisie en fonction de plusieurs positions angulaires de l'arbre de moteur (24) qui ont été détectées aux positions d'ouverture de référence.

6. Procédé selon l'une des revendications 1, 4 à 5,
   **caractérisé en ce que**
   la position d'ouverture de référence comporte un angle d'ouverture du vantail (5) de 90° et/ou 45° par rapport à une position de fermeture.

7. Procédé selon l'une au moins des revendications précédentes,
   **caractérisé en ce que**
   la relation fonctionnelle déterminée est insérée dans une équation modèle décrivant le mouvement du vantail (5) et le moment d'inertie du vantail (5) est déterminé par résolution de l'équation modèle.

8. Procédé selon l'une au moins des revendications précédentes,
   **caractérisé en ce que**
   la position angulaire de l'arbre de moteur (24) est détectée au moyen d'un codeur incrémental.

9. Dispositif de fermeture de porte ou de fenêtre (1) qui comprend un accumulateur d'énergie (28) destiné à fournir une force de fermeture destinée à fermer un vantail rotatif (5) de la porte ou de la fenêtre, un dispositif d'amortissement (20) qui s'oppose à la force de fermeture et qui comprend un moteur électrique (22) et un dispositif de commande électronique (10) destiné à commander le moteur électrique (22), un arbre de moteur (24) du moteur électrique (22) étant accouplé au vantail (5) par le biais d'au moins un élément de transmission (7, 26, 27) et pouvant donc être

**EP 3 361 033 B1**

entraîné en rotation par un mouvement du vantail (5) et le dispositif de fermeture de porte ou de fenêtre (1) comprenant un codeur incrémental destiné à détecter la position angulaire de l'arbre de moteur (24),

**caractérisé en ce que**

le dispositif de commande électronique (10) est conçu pour un procédé de mise en service selon l'une des revendications précédentes.

**12**

FIG. 1

Fig. 2

Fig. 3

EP 3 361 033 B1

Fig. 4

Fig. 5

16

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015200284 B3
- EP 1437476 A2
- EP 1870552 A2
- DE 102005001328 A1
- US 20100115853 A1
- US 5687507 A